# EUROPÄISCHE PATENTSCHRIFT

(11) **EP 0 874 034 B1**
(45) Veröffentlichungstag und Bekanntmachung des Hinweises auf die Patenterteilung: **27.10.1999**
(21) Anmeldenummer: 98106345.6
(22) Anmeldetag: 07.04.1998
(51) Int. Cl.: C09J 7/02, B29C 47/14, B29C 47/06

(54) **Verfahren zur Herstellung eines druckempfindlichen doppelseitigen Klebebands auf Kautschukbasis**
Method for producing a pressure sensitive double-sided rubber based adhesive tape
Procédé pour produire une bande adhésive double face à base de caoutchouc sensible à la pression

(30) Priorität: 23.04.1997 DE 19716996
(43) Veröffentlichungstag der Anmeldung: 28.10.1998
(73) Patentinhaber: Beiersdorf Aktiengesellschaft, 20245 Hamburg (DE)
(72) Erfinder: Dietz, Bernd, 22949 Ammersbek (DE); Kluge-Paletta, Werner, 21244 Buchholz (DE); Karmann, Werner, Dr., 22147 Hamburg (DE); Szonn, Bodo, 24639 Kisdorf (DE); Henke, Frank, Dr., 21629 Neu Wulmstorf (DE)

(56) Entgegenhaltungen:
- EP-A- 0 305 161
- EP-A- 0 453 254
- DE-A- 3 505 128
- US-A- 5 047 196
- US-A- 5 589 122

## Beschreibung

Die Erfindung betrifft ein Verfahren zur Herstellung eines druckempfindlichen doppelseitigen Klebebands auf Kautschukbasis.

In der amerikanischen Patentschrift US 4,440,829 wird ein beidseitig klebendes Klebeband sowie ein Verfahren zur Herstellung des Klebebands beschrieben, das als Träger eine gewalzte Mischung im wesentlichen aus vernetztem und unvernetztem Butyl-Kautschuk, Pigmenten und Weichmachern hat. Diese Edukte werden in einem Mischer zu einer Masse verarbeitet. Die Masse wird anschließend zu einem bandförmigen Träger extrudiert, wobei der Träger walz- und extrudierbar ist und auch ausreichend hohe Zugfestigkeiten aufweist.
Die Extrusion erfolgt direkt in eine Lösung des druckempfindlichen Klebers in organischem Lösungsmittel, vorzugsweise auf Basis von Acryl-Copolymeren. Als Kleber werden solche ausgesucht, die sowohl eine hohe Klebkraft und eine ausreichende Scherfestigkeit als auch eine genügende Adhäsion zum Träger aufweisen, um beim Abziehen kohäsiv zu versagen.
Überschüssiger Kleber wird abgewaschen, und das so entstandene Klebeband wird auf eine Releaseschicht gelegt, gegebenenfalls später zu einer Rolle aufgerollt.

Das geschilderte Verfahren hat den Nachteil, daß große Weichmachermengen eingesetzt werden müssen, um die Verarbeitbarkeit mittels Walzen und Extrusion sicherzustellen. Diese großen Weichmachermengen verringern aber die angestrebte hohe Festigkeit des Kautschukträgers. Weiterhin migrieren Weichmacher erfahrungsgemäß an die Oberflächen des Trägers und erschweren somit die Verankerung des Klebers.

Darüber hinaus können sie auch direkt in den Kleber wandern und somit dessen Klebkräfte und Scherfestigkeit herabsetzen.

Des weiteren erfolgt der Kleberauftrag aus einer organischen Lösung nach der Extrusion, was einen hohen Energieeinsatz bedingt, um das organische Lösungsmittel aus den aufgetragenen Schichten zu entfernen. Schließlich sind aufwendige Trocknerkonstruktionen notwendig, um ökonomische Bahngeschwindigkeiten zu ermöglichen. Dann ist auch den geltenden Bestimmungen des Explosions- und Brandschutzes Sorge zu tragen.

Da keine nachträgliche Vernetzungsmöglicheit vorgesehen ist, sind außerdem die erreichbaren Zugfestigkeiten des Produktes durch die maximalen Verarbeitungsviskositäten der Walzen und der Extruder vorgegeben.

Aufgabe der Erfindung war es, ein Verfahren zur Verfügung zu stellen, das eine Herstellung eines druckempfindlichen beidseitigen Klebebands mit einem Träger auf Kautschukbasis auf möglichst effiziente Weise ermöglicht.

Gelöst wurde diese Aufgabe durch ein Verfahren, wie es in dem Anspruch 1 näher dargestellt ist. Vorteilhafte Ausführungsformen sowie Weiterbildungen sind dabei Gegenstand der Unteransprüche.

Demnach weist das Verfahren zur Herstellung eines druckempfindlichen doppelseitigen Klebebands die im folgenden geschilderten Verfahrensschritte auf.

Zunächst wird in einen Schneckenextruder, vorzugsweise ein Einschneckenextruder, ein vorkonfektioniertes Trägermaterial auf Kautschukbasis aufgegeben. Die Zuführung kann dabei in Form von Fütterstreifen erfolgen.
Die Anfertigung der Fütterstreifen geschieht in einer dem Fachmann geläufigen Art und Weise, beginnend mit der Mischung der einzelnen Komponenten des Trägermaterials vorzugsweise diskontinuierlich in einem für die Elastomer-Compoundierung typischen Innenmischer (zum Beispiel ein Banbury-lnnenmischer), aber auch die Herstellung im inline-Prozeß mittels Schneckenmaschinen ist möglich. Die Mischung des Trägermaterials kann anschließend auf handelsüblichen Maschinen auf die gewünschte Dicke gewalzt, mit einem inhärenten Trennmittel versehen und zu Fütterstreifen mit einer für den Einzug am Extruder geeigneten Geometrie geschnitten werden. Abschließend können diese dann als Wig-Wag-Fell auf Paletten abgelegt werden.

Das Trägermaterial wird im Extruder durch die eine beziehungsweise durch mehrere rotierende Schnecken erfaßt und stromabwärts transportiert. Neben der eingebrachten Scherenergie sorgen vor allen Dingen am Schneckenextruderzylinder angebrachte Heizelemente für eine Erwärmung des Trägermaterials.

In einer handelsüblichen Entgasungszone wird mittels angelegten Unterdrucks das Trägermaterial von flüchtigen Anteilen befreit.

Nach der Entgasungsstation wird das Trägermaterial weiter transportiert, homogenisiert und auf eine Solltemperatur von 120 °C bis 160 °C gebracht.

Im zweiten Verfahrensschritt wird das Trägermaterial einem in der kunststoffverarbeitenden Industrie üblichen Coextrusionsadapter zugeführt, in dem beidseitig eine Sperrschicht mittels geeigneten Verteilereinsatz es um die Trägerschicht gelegt wird. Die Sperrschicht wird dabei mittels eines weiteren Extruders oder einem anderen geeigneten Aggregat zum Schmelzen und Fördern thermoplastischer Medien zugeführt. Dies können zum Beispiel in der Klebstoffindustrie übliche Faßschmelzen, Premelter, Schmelzepumpen oder andere Schmelz- und Förderorgane sein.
Unter dem Begriff Extruder sind im folgenden auch andere geeignete, oben genannte Schmelz- und Förderorgane zu verstehen. Hiermit ist auch die Kombination von Extruder und Schmelzepumpe gemeint, die in diesem Falle zur Verbesserung der Förderkonstanz eingesetzt werden kann. Lieferanten solcher Schmelzepumpen sind zum Beispiel die Firmen Maag (Zürich, Schweiz) oder Witte (Itzehoe, Deutschland).

Der so gebildete Zwischenverbund wird einer Drei-Kanal-Breitschlitzdüse zugeführt und gleichmäßig bahnförmig ausgeformt.

Auf den resultierenden Zwischenverbund wird in der Drei-Kanal-Breitschlitzdüse oben und unten ein jeweils mit Hilfe eines geeigneten Schmelz- und Förderorgans zugeführter Schmelzhaftkleber in geeigneter Schichtdicke vollflächig aufgelegt.

Das so hergestellte Klebeband wird auf ein antiadhäsives Substrat, vorzugsweise silikonisiertes Papier, aufgelegt

Gegebenenfalls wird das Klebeband abgekühlt und vernetzt.

Vorzugsweise erfolgt dabei die Vernetzung des Trägermaterials mit Hilfe von Elektronenstrahlen im Dosisbereich von 30 kGy bis 150 kGy, bevorzugt 50 kGy bis 100 kGy, wobei die Beschleunigungsspannungen zwischen 200 kV bis 1000 kV liegen, und zwar abhängig vom Flächengewicht der zu durchstrahlenden Schicht.

Alternativ dazu ist eine thermische Vernetzung möglich. Ist anstatt der Elektronenstrahlvernetzung eine thermische Vernetzung vorgesehen, so können über geeignete thermische Aktivierungsstrecken wie Kontakttrockner, Konvektionstrockner, IR-Strahler oder Mikrowellenanregung die erwünschten Prozesse realisiert werden.

Mit der Vernetzung können die mechanischen Eigenschaften des Trägermaterials gezielt auf die erforderlichen Produkteigenschaften eingestellt werden.

Das erhaltene Klebeband kann in der gewünschten Länge zu Ballen gewickelt und mit Hilfe der allgemein üblichen Konfektionierungsprozesse zum Endprodukt weiterverarbeitet werden.

In einer vorteilhaften Ausführungsvariante des Verfahrens wird zwischen den Prozeßschritten a) und b) beidseitig zusätzlich ein Haftvermittler mittels geeignetem Verteilereinsatz auf das Trägermaterial aufgelegt.

Vorteilhafterweise wird der Schmelzhaftkleber einem einzigen Schmelz- und Förderorgan, wie beispielsweise einem Extruder, zugeführt, aufgeschmolzen, transportiert und durch geeignete Leitungsführung, also insbesondere bei symmetrischen Leitungs- und Düsenausführungsverhältnissen, beidseitig gleichmäßig auf den Zwischenverbund aufgelegt.

Weiterhin ist für das erfindungsgemäße Verfahren eine Anpassung an die Verarbeitungsviskositäten und Verarbeitungstemperaturen von Trägermaterial und dem Schmelzhaftkleber erforderlich. Die Verarbeitungsviskositäten sollten, wie in der Coextrusion üblich, so gut wie möglich im relevanten Schergefälle-Bereich aneinander angepaßt sein. Das Viskositätsverhältnis von Trägermaterial und dem Schmelzhaftkleber sollte den Betrag von 10, vorteilhafterweise den Betrag von 8 nicht überschreiten. Die Verarbeitungstemperaturen der eingesetzten Materialien sollten nicht mehr als 50°C, bevorzugt weniger als 30 °C voneinander abweichen.

Die als Trägermaterial verwendeten Kautschuke sind insbesondere ein Naturkautschuk, ein Butylkautschuk, ein Acrylnitril-Butadienkautschuk, ein Random-Styrol-Butadien-Kautschuk oder ein Blend aus den genannten Kautschuken, bevorzugt ein Blend aus einem Naturkautschuk und einem Random-Styrol-Butadien-Kautschuk, ganz besonders bevorzugt aber ein Naturkautschuk.
Vorteilhafterweise weist der Kautschuk einen Mooneywert ML₍₁₊₄₎ (100 °C) von 40 bis 80 auf.

Die als Trägermaterial verwendeten Kautschuke können mit einem oder mehreren Additiven wie Alterungsschutzmitteln, Vernetzern, Lichtschutzmitteln, Ozonschutzmitteln, Fettsäuren, Harzen und Vulkanisationsmitteln abgemischt sein, weiterhin können die Kautschuke mit einem oder mehreren Füllstoffen wie Ruß, Zinkoxid, Kieselsäure, Silikaten und Kreide gefüllt sein, insbesondere um die mechanischen Eigenschaften des Trägermaterials gezielt auf die spätere Verwendung des Klebebands einzustellen.

Vorteilhafterweise sind dann noch die als Trägermaterial verwendeten Kautschuke mit flüssigem Polyisobutylen, Copolymeren davon oder flüssigen Polyisoprenen als Weichmacher abgemischt, und zwar flüssigen Polyisobutylen- oder Polyisopren-Typen mit hohem Molgewicht. Diese erlauben bei nur geringer Migrationsneigung eine definierte Absenkung und Anpassung der Viskosität des Trägermaterials auf die anderen, gegebenenfalls im weiteren Prozeß eingesetzten Komponenten.
Weiterhin wirken flüssiges Polyisobutylen, Copolymere davon oder flüssige Isoprene als Verarbeitungshilfe. Sie fördern die Erzielung glatter Oberflächen und wirken den bei der Verarbeitung unerwünschten starken elastischen Effekten wie der Strangaufweitung des Trägermaterials entgegen.

Alternativ können die als Trägermaterial verwendeten Kautschuke mit einem elektronenstrahlvernetzenden Weichmacher (sogenannten Vernetzungspromotoren) abgemischt sein, zum Beispiel multifunktionelle Acrylate wie multifunktionelle Polyglycolacrylate, Acrylatester oder Polyesteracrylate. Die Erfindung ist aber nicht auf die hier aufgeführten Acrylate beschränkt. Vielmehr liegen auch innerhalb des Erfindungsgedankens weitere Acrylate, die elektronenstrahlvernetzbar sind.
Diese Acrylate, aber auch die anderen Weichmacher werden in das Trägermaterial oder der Sperrschicht oder in Trägermaterial und Sperrschicht, bevorzugt aber in das Trägermaterial, eingearbeitet. Sie verbessern bei sorgfältiger Rezeptierung die Haftung ausgewählter, benachbarter Schichten. Zusätzlich wirken diese Substanzen als Verarbeitungshilfe für die Extrusion und senken den Dosisbedarf bei eventueller Elektronenstrahlvernetzung.
Durch ihren Einsatz können andere Weichmacher ganz oder teilweise ersetzt werden.

In einer besonders vorteilhaften Mischung weist das Trägermaterial die folgende Zusammensetzung auf:
- Kautschukanteil 40 Gew.-% bis 70 Gew.-%,
- Füllstoffanteil 10 Gew.-% bis 50 Gew.-%,
- Weichmacheranteil 4 Gew.-% bis 40 Gew.-%,
- Alterungsschutzmittel 0,1 Gew.-% bis 2 Gew.-%,
- Vulkanisationshilfsmittel weniger als 10 Gew.-%,
- gegebenenfalls Schäumungsmittel weniger als 10 Gew.-%.
- gegebenenfalls Farbstoffanteil weniger als 5 Gew.-%.

Beim Einsatz von den oben angeführten Vernetzungspromotoren sinkt der Anteil der Weichmacher in Form der Vernetzungspromotoren auf 1 Gew.-% bis 10 Gew.-% ab.

Soll das Trägermaterial geschäumt werden, ist diesem noch ein geeignetes Schäumungsmittel zuzusetzen. In diesem Fall ist das Verfahren noch um einen weiteren Verfahrensschritt zu erweitern, und zwar um die thermische Aktivierung.
Der Farbstoff dient lediglich dazu, einen bestimmten Farbton des Trägermaterials gezielt einzustellen.

Weiter vorzugsweise besitzt das Trägermaterial eine Dicke von 300 µm bis 2000 µm, insbesondere 400 µm bis 1200 µm, wobei sich die Dicke des Trägermaterials selbstverständlich nach dem späteren Einsatzzweck des Klebebands richtet.

Die Dicke der Trägerschicht wird bei einem Verfahren mit Elektronenstrahlvernetzung so ausgewählt, daß die gesamte Materialdicke 1000 g/m² nicht überschreitet. Damit ist gewährleistet, daß kostengünstige einstufige Elektronenstrahler ohne übermäßigen Abschirmungsaufwand eingesetzt werden können, was schon allein aus Strahlenschutzgründen erfolgen sollte. Einstufige Elektronenstrahler besitzen optimalerweise eine Beschleunigungsspannung von ca. 300 kV, was einen nachträglichen Arbeitsgang wegen der benötigten beidseitigen Vernetzung erfordert.
Auch eine beidseitige Vernetzung mittels einer zweiten, einstufigen Elektronenstrahlvernetzungsanlage ist möglich, wobei weiterhin ein einziger Arbeitsgang aufrecht erhalten wird.
Bei Verwendung von mehrstufigen Elektronenstrahlvernetzungsanlagen mit Beschleunigungsspannungen im Bereich von mehreren MeV sind auch Flächengewichte von deutlich über 1000 g / m² in einem Arbeitsgang homogen vernetzbar.

Durch geeignete physikalische oder chemische Schäumungsmittel können über eine deutliche Dichtereduzierung geschäumte Trägermaterialien mit Schichtdicken von mehreren Millimetern, insbesondere zwei Millimeter, realisiert werden. Damit können auch größere Oberflächenrauhigkeiten und Fügetoleranzen abgedeckt werden, so daß mit diesem Verfahren ein Großteil der im Markt erforderlichen Schichtdicken hergestellt werden kann.

Thermisch vernetzbare Systeme können darüber hinaus Trägermaterialdicken deutlich größer als zwei Millimeter erzielen.

Die untere Grenze der Trägerdicke wird durch abnehmende Anpassungsfähigkeit, besonders bei rauhen Untergründen, festgelegt.

Auf die bekannten Methoden der Allzweckkautschuk-Rezeptierung und Verarbeitung sowie den dafür eingesetzten Additiven, etwa dem Buch von Werner Kleemann ("Mischungen für die Elastverarbeitung "), wird ausdrücklich Bezug genommen.

Die auf das Trägermaterial aufgebrachte Sperrschicht besteht vorteilhafterweise aus PVDC, EVOH oder Nitrilkautschuk, vorzugsweise aus teilkristallinen Polyamid-Typen, aber auch andere aus der Schmelze verarbeitbare Materialien mit Sperreigenschaften können verwendet werden.

Die genannten Materialien sind als getrocknete, schüttfähige Granulate ohne weitere Arbeitsschritte für das erfindungsgemäße Verfahren einsetzbar. Ihre Auswahl richtet sich nach den erzielbaren Sperreigenschaften, der Verankerungswirkung zur Schicht des Trägermaterials und der Kleberschicht sowie den Verarbeitungseigenschaften.

Die Sperrschicht hat im wesentlichen die Aufgabe, migrierende Stoffe aus dem Trägermaterial daran zu hindern, in den Schmelzhaftklebers zu wandern und damit die Verankerung von Schmelzhaftkleber zu Trägermaterial abzusenken. Auch eine Verschlechterung der Klebkräfte und/oder der Scherfestigkeit der druckempfindlichen Kleberschicht soll ausgeschlossen werden. Des weiteren soll die Sperrschicht eine negative Beeinflussung des Trägermaterials durch die Kleberschicht oder durch Luftbestandteile (beispielsweise Sauerstoff oder Ozon) verhindern, zumindest aber wirksam vermindern. Die Sperrschicht wird dabei in einer Menge aufgetragen, daß einerseits am späteren Klebeband ein vollflächiger und geschlossener Film entsteht, andererseits aber die sorgfältig ausbalancierten mechanischen Eigenschaften wie Reißdehnung und Zugfestigkeit des Trägermaterials nicht nennenswert beeinflußt werden. Weiterhin muß die Menge ausreichen, einer Migration unter Einsatzbedingungen des späteren Klebebands, also zum Beispiel bei erhöhter Temperatur oder Scherbelastung, wirksam entgegen zu wirken.

Die Sperrschicht kann zusätzlich mit haftvermittelnden Substanzen abgemischt sein, insbesondere wenn eine besonders starke Verankerung zwischen der Schicht des Trägermaterials und der Sperrschicht notwendig ist.

Das Haftvermögen der Sperrschicht kann durch entsprechenden Verschnitt (Blend) mit den bekannten haftvermittelnden Substanzen erfolgen. Als Beispiele können hier Ionomere, spezielle LDPE-Typen, EVA, anhydridmodifizierte Polyolefine sowie EAA genannt werden.

Alternativ können bekannte Haftvermittler als separate Schicht auf den Kautschukträger aufgebracht werden. Auch hier ist wieder eine Menge Haftvermittler zu wählen, die eine ausreichende Haftung zwischen der Schicht des Trägermaterials und der Sperrschicht unter den Einsatzbedingungen des Produktes sicherstellt, die sorgfältig ausbalancierten mechanischen Eigenschaften wie Reißdehnung und Zugfestigkeit des Trägers aber nicht nennenswert beeinflußt.

Die Sperrschicht weist eine Dicke auf von 5 µm bis 40 µm, insbesondere 10 µm bis 30 µm.

Das Viskositätsverhältnis von Trägermaterial und der Sperrschicht überschreitet vorzugsweise nicht den Betrag von 5, insbesondere nicht den Betrag von 2.

Der Schmelzhaftkleber, vorzugsweise ein Acrylatsystem und/oder ein Synthesekautschuksystem, wird mit einem Flächengewicht von 30 g / m² bis 100 g /m², vorzugsweise 40 g / m² bis 80 g / m² aufgelegt.

Als Klebemassen werden ganz besonders bevorzugt geeignete Schmelzhaftkleber auf Acrylat-Basis eingesetzt, und zwar ein Acrylatsystem, das im Dosisbereich von 30 kGy bis 150 kGy elektronenstrahlvernetzt werden kann.
Die Schmelzhaftkleber auf Acrylat-Basis können nach den üblichen Verfahren aus den Monomeren polymerisiert und aufkonzentriert werden. Die Abfüllung erfolgt beispielsweise in Fässer oder antiadhäsiv ausgerüsteten Behältnissen, worin die Schmelzhaftkleber bis zur Beschichtung auf Temperatur gehalten oder zur Beschichtung aufgeschmolzen werden.

Im erfindungsgemäßen Verfahren wird der Schmelzhaftkleber vorzugsweise in Strangform abgefüllt und einem Schmelzextruder als Fütterstrang zugeführt. Aber auch die beschriebenen alternativen Schmelz- und Förderorgane können zum Einsatz kommen.

Das Sperrschichtgranulat wird im vorgeschlagenen Prozeß einem Schmelz- und Förderextruder über einen Trichter zugeführt.

Die Steuerung der Durchsätze und damit der Schichtdicken der Einzelmaterialien erfolgt über die Drehzahl der jeweiligen Extruder, bei Betrieb mit Schmelzepumpen über deren Drehzahl.

Die vorliegende Erfindung beschreibt ein Verfahren zur Herstellung eines beidseitig klebenden Hochleistungsklebeband mit hoher Scherfestigkeit und besonderer Kältefestigkeit. Eine weitere wesentliche Eigenschaft des Hochleistungsklebebands ist die hohe Klebkraft zur Erzielung guter Verbindungsfestigkeiten. Das Klebeband ist ein symmetrischer Mehrschichtaufbau, bestehend aus einer Schicht eines Trägermaterials in der Mitte, je einer Sperrschicht auf jeder Seite des Trägermaterials und je einer Kleberschicht auf der Sperrschicht.

Mit dem erfindungsgemäßen Verfahren läßt sich ökonomisch und in einem Arbeitsgang das genannte Hochleistungsklebeband mit den erwähnten besonderen Eigenschaften und im wesentlichen kostengünstigen Rohstoffen herstellen.

Als Anlagenteile sind zur Durchführung der Verfahrensschritte mindestens ein leistungsfähiger Hauptextruder, gegebenenfalls in Kombination mit einer geeigneten Austragspumpe, ein Nebenextruder für die Sperrschicht, gegebenenfalls ein weiterer Nebenextruder für den Haftvermittler sowie zumindest ein Extruder für die Kleberschicht notwendig. Altemativ können für Förderzwecke auch jeweils andere geeignete, aufgeführte Schmelz- und Förderorgane eingesetzt werden. Weiterhin werden ein CoextrusionsAdapter, eine Mehrkanal-Breitschlitzdüse, eine Abzugsvorrichtung und eine Kühlvorrichtung, eine Vernetzungsanlage, vorzugsweise eine Elektronenstrahlvernetzung, sowie eine Aufwickelvorrichtung benötigt.

Im folgenden soll anhand einer Figur das erfindungsgemäße Verfahren sowie die dazu notwendigen Anlagenteile näher beschrieben werden, ohne die Erfindung damit unnötig einschränken zu wollen.

Die Zugabe des vorkonfektionierten Trägermaterials erfolgt in Form von Fütterstreifen in den Einzug des Hauptextruders (1), der ein Einschneckenextruder ist. Die rotierende Schnecke im Hauptextruder (1) erfaßt das Trägermaterial und transportiert es stromabwärts. Durch die mittels der im Hauptextruder (1) befindlichen Schnecke eingebrachte Scherenergie und die am Hauptextruder (1) angebrachten Heizelemente wird das Trägermaterial erwärmt und in einer Entgasungszone mittels angelegten Unterdruck es von flüchtigen Anteilen befreit. Nach Passieren der Entgasungsstation wird das Trägermaterial weiter transportiert, homogenisiert und auf eine gleichmäßige Temperatur von ca. 150 °C gebracht.
Fremdstoffe und grobe Partikel aus dem Mischungs-Herstellungprozeß werden durch Siebpakete eines konventionellen Schmelzefilters entfernt.

Das auf Solltemperatur befindliche Trägermaterial wird im weiteren Verfahrensablauf einem in der kunststoffverarbeitenden Industrie üblichen Coextrusionsadapter (2) zugeführt. In dem Coextrusionsadapter (2) wird die von einem Nebenextruder (3) herangeförderte, schmelzeflüssige Sperrschicht mittels geeigneten Verteilereinsatz es auf das Trägermaterial aufgetragen, woraus ein zweikomponentiger Zwischenverbund resultiert. Hier nicht näher dargestellt, wird, falls erforderlich, unmittelbar vorher im Adapter noch ein Haftvermittler mittels geeigneten Verteilereinsatz zwischen Trägermaterial und Sperrschicht aufgebracht.
Die Geometrie der genannten Verteilereinsätze ist den gegebenen Verfahrensparametern so anzupassen, daß glatte, gleichmäßige, geschlossene Schichtdicken über die gesamte Bahnbreite erzielt werden.

Der Zwischenverbund wird weiter stromabwärts in den mittleren Schmelzekanal einer Drei-Kanal-Breitschlitzdüse (4), im folgenden auch als Mehrkanaldüse bezeichnet, transportiert und dort durch eine geeignete Kanalgeometrie bahnförmig ausgeformt. Eine Justierung der Schicht des Zwischenverbunds erfolgt durch eine geeignete Vorrichtung zur Schmelzekalibrierung, zum Beispiel durch einen Staubalken. Auch der Einsatz einer geeignet ausgeführten Membran ist möglich.

Der ebenfalls mit Hilfe eines weiteren Nebenextruders (5) aufgeschmolzene und transportierte Schmelzhaftkleber wird in den oberen und unteren Schmelzekanal der Mehrkanaldüse (4) eingespeist, analog dem Zwischenverbund ausgeformt und die Schichtdickenverteilung separat justiert. Im Kombinationsteil der Mehrkanaldüse (4) werden die beiden Schichten des Schmelzhaftklebers mit dem Zwischenverbund zusammengeführt und unter Beschichtungsdruck aufeinandergelegt.

Eine Einstellung der Schichtdickenverteilung des Gesamtverbundes erfolgt im Austrittsbereich der Mehrkanaldüse durch flexible Lippen.

Das so erhaltene Klebeband (10) wird auf ein antiadhäsives Substrat, ein silikonisiertes Papier (11), aufgelegt. Das Klebeband (10) wird hierbei von einer Kühlwalze (21) geführt, die für eine ausreichende Abkühlung des Klebebands (10) sorgt.
Hier ebenfalls nicht näher dargestellt, kann mit geeigneten Kühlvorrichtungen weiter abgekühlt werden.

Mit Hilfe einer Vorrichtung (31) wird das Klebeband (10) elektronenstrahlvernetzt. Die Strahlendosis liegt dabei im Bereich von 30 kGy bis 150 kGy, und zwar hier bei 80 kGy. Die Beschleunigungsspannung ist entsprechend dem Flächengewicht des Produktes auszuwählen; für einstufige Beschleunigeranlagen gängige Spannungen sind 200 kV bis 300 kV. Auch mehrstufige Beschleunigertypen mit Spannungen bis zu einigen 1000 kV können eingesetzt werden.

Abschließend wird das Klebeband (10) in der gewünschten Länge zu Ballen (12) gewikkelt und kann mittels bekannter Konfektionierungsprozesse zum Endprodukt weiterverarbeitet werden.

Des weiteren soll ein nach dem erfindungsgemäßen Verfahren hergestelltes Klebeband mit Hilfe eines Beispiels beschrieben werden.

### Beispiel:

Zur Herstellung eines Hochleistungsklebebandes mittels Coextrusion wurde ein Einschneckenextruder mit einem Durchmesser von 90 mm (Hauptextruder) mit einem Coextrusionsadapter und einer Dreischichtdüse ausgerüstet.
Als Nebenextruder zur Versorgung des Coextrusionsadapter mit Sperrschichtmaterial wurde ein Einschneckenextruder mit einem Durchmesser von 45 mm eingesetzt.
Der Nebenextruder zum Heranfördern des Schmelzhaftklebers zu der Mehrkanaldüse wies einen Durchmesser von 60 mm auf.

Der Hauptextruder wurde zur Entfernung flüchtiger Anteile mit einer Entgasungsstation ausgestattet und auf ein Temperaturprofil von 70 °C bis 145 °C eingestellt. Der Durchsatz betrug 52 kg/h bei einer Drehzahl von 20 1/min. Die Mischungstemperatur stellte sich im Bereich von 150 °C ein.

Der Nebenextruder zum Heranfördem der Sperrschicht wurde im Temperaturbereich von 70 °C bis 165 °C gefahren, wobei sich eine Schmelzetemperatur von 166 °C einstellte. Der Durchsatz wurde auf 4 kg/h festgelegt.

Der Nebenextruder zum Heranfördern des Schmelzhaftklebers wurde im Temperaturbereich von 80 °C bis 135 °C gefahren, wobei sich eine Schmelzetemperatur von 140 °C einstellte. Der Durchsatz wurde auf 9 kg/h festgelegt.
Bei einer Düsenarbeitsbreite von 400 mm betrug die Abzugsgeschwindigkeit 4,5 m/min. Die so erhaltene Klebebahn wurde beidseitig mit 80 kGy bei 350 kV Beschleunigungsspannung elektronenstrahlvernetzt.

Das erhaltene Klebeband wies gleichmäßige, geschlossene Filme der Sperrschichten auf dem Trägermaterial sowie der Schmelzhaftkleberschichten auf den Sperrschichten auf.

Die Schichtdicke des Trägermaterials wurde mit 500 µm bestimmt, die Dicke der Sperrschichten betrug jeweils 20 µm, und die Dicke der Schmelzhaftkleberbeschichtung betrug je 45 µm.

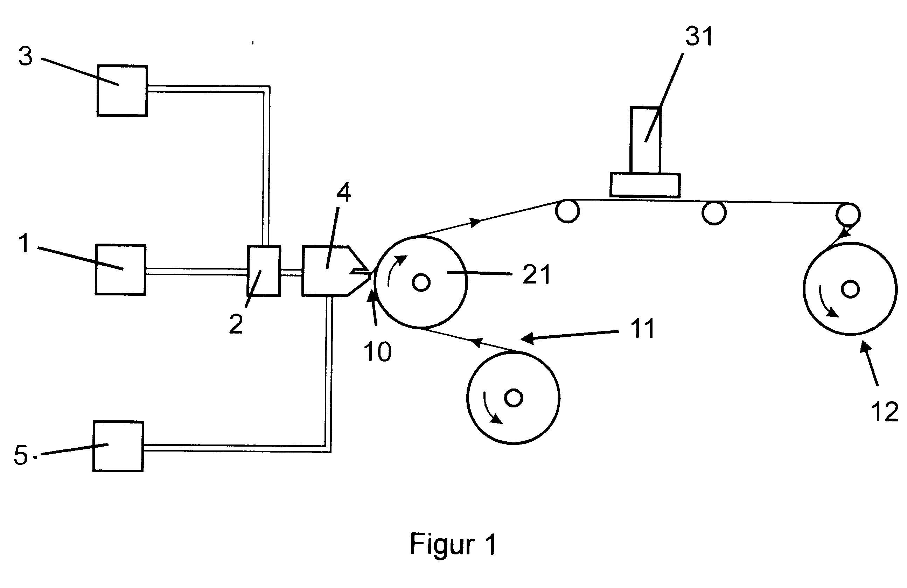

## Patentansprüche

1. Verfahren zur Herstellung eines druckempfindlichen doppelseitigen Klebebands, wobei
a) in einen Schneckenextruder ein vorkonfektioniertes Trägermaterial auf Kautschukbasis aufgegeben wird, wobei
1. das Trägermaterial durch am Schneckenextruder vorhandene Heizelemente erwärmt wird,
2. das Trägermaterial in einer Entgasungszone mittels angelegtem Unterdrucks von flüchtigen Bestandteilen befreit wird,
3. das Trägermaterial homogenisiert und auf Solltemperatur gebracht wird,
b) in einem Coextrusionsadapter eine mittels eines weiteren geeigneten Schmelz- und Förderorgans herangeförderte Sperrschicht beidseitig auf das Trägermaterial aufgelegt wird,
c) der so gebildete Zwischenverbund einer Drei-Kanal-Breitschlitzdüse zugeführt und gleichmäßig bahnförmig ausgeformt wird,
d) auf den Zwischenverbund in der genannten Drei-Kanal-Breitschlitzdüse oben und unten ein jeweils mit Hilfe eines geeigneten Schmelz- und Förderorgans zugeführter Schmelzhaftkleber vollflächig aufgelegt wird,
e) das so hergestellte Klebeband auf ein antiadhäsives Substrat, vorzugsweise silikonisiertes Papier, aufgelegt wird,
f) gegebenenfalls das Klebeband abgekühlt und vernetzt wird.

2. Verfahren nach Anspruch 1, dadurch gekennzeichnet, daß mit Hilfe von Elektronenstrahlen im Dosisbereich von 30 kGy bis 150 kGy, bevorzugt 50 kGy bis 100 kGy, das Trägermaterial vernetzt wird, wobei die Beschleunigungsspannungen zwischen 200 kV bis 1000 kV liegen.

3. Verfahren nach den Ansprüchen 1 oder 2, dadurch gekennzeichnet, daß zwischen den Prozeßschritten a) und b) beidseitig zusätzlich ein Haftvermittler auf das Trägermaterial aufgelegt wird.

4. Verfahren nach den Ansprüchen 1 bis 3, dadurch gekennzeichnet, daß der Schmelzhaftkleber in einem Schmelz- und Förderorgan geschmolzen und transportiert und durch geeignete Leitungsführung beidseitig auf den Zwischenverbund aufgelegt wird.

5. Verfahren nach den Ansprüchen 1 bis 4, dadurch gekennzeichnet, daß das Viskositätsverhältnis von Trägermaterial und der Sperrschicht den Betrag von 5, insbesondere den Betrag von 2 nicht überschreitet und das Viskositätsverhältnis von Trägermaterial und dem Schmelzhaftkleber den Betrag von 10, insbesondere den Betrag von 8 nicht überschreitet.

6. Verfahren nach den Ansprüchen 1 bis 5, dadurch gekennzeichnet, daß der als Trägermaterial verwendete Kautschuk ein Naturkautschuk, ein Butylkautschuk ein Acrylnitril-Butadienkautschuk, ein Random-Styrol-Butadien-Kautschuk oder ein Blend aus den genannten Kautschuken sind, besonders ein Blend aus einem Naturkautschuk und einem Random-Styrol-Butadien-Kautschuk, ganz besonders bevorzugt aber ein Naturkautschuk.

7. Verfahren nach Anspruch 6, dadurch gekennzeichnet, daß der Kautschuk einen Mooneywert ML₍₁₊₄₎ (100 °C) von 40 bis 80 aufweist.

8. Verfahren nach den Ansprüchen 6 oder 7, dadurch gekennzeichnet, daß die als Trägermaterial verwendeten Kautschuke mit einem oder mehreren Additiven wie Alterungsschutzmitteln, Vernetzern, Lichtschutzmitteln, Ozonschutzmitteln, Fettsäuren, Harzen und Vulkanisationsmitteln abgemischt sind.

9. Verfahren nach den Ansprüchen 6 bis 8, dadurch gekennzeichnet, daß die als Trägermaterial verwendeten Kautschuke mit einem oder mehreren Füllstoffen wie Ruß, Zinkoxid, Kieselsäure, Silikaten und Kreide gefüllt sind.

10. Verfahren nach den Ansprüchen 6 bis 9, dadurch gekennzeichnet, daß die als Trägermaterial verwendeten Kautschuke mit Polyisobutylen, Copolymeren davon oder Polyisoprenen als Weichmacher abgemischt sind.

11. Verfahren nach den Ansprüchen 6 bis 10, dadurch gekennzeichnet, daß die als Trägermaterial verwendeten Kautschuke mit einem elektronenstrahlvernetzenden Weichmacher wie multifunktionellen Acrylaten abgemischt sind.

12. Verfahren nach den Ansprüchen 6 bis 11, dadurch gekennzeichnet, daß das Trägermaterial die folgende Zusammensetzung aufweist:
- Kautschukanteil 40 Gew.-% bis 70 Gew.-%,
- Füllstoffanteil 10 Gew.-% bis 50 Gew.-%,
- Weichmacheranteil 4 Gew.-% bis 40 Gew.-%,
- Alterungsschutzmittel 0,1 Gew.-% bis 2 Gew.-%,
- Vulkanisationshilfsmittel weniger als 10 Gew.-%,
- gegebenenfalls Schäumungsmittel weniger als 10 Gew.-%,
- gegebenenfalls Farbstoffanteil weniger als 5 Gew.-%.

13. Verfahren nach den Ansprüchen 1 bis 12, dadurch gekennzeichnet, daß das Trägermaterial eine Dicke von 300 µm bis 2000 µm, insbesondere 400 µm bis 1200 µm, aufweist.

14. Verfahren nach den Ansprüchen 1 bis 13, dadurch gekennzeichnet, daß die Sperrschicht aus PVDC, EVOH oder Nitrilkautschuk, besonders Polyamid besteht.

15. Verfahren nach den Ansprüchen 1 bis 14, dadurch gekennzeichnet, daß die Sperrschicht zusätzlich mit haftvermittelnden Substanzen abgemischt ist.

16. Verfahren nach den Ansprüchen 1 bis 15, dadurch gekennzeichnet, daß die Sperrschicht eine Dicke von 5 µm bis 40 µm, insbesondere 10 µm bis 30 µm, aufweist.

17. Verfahren nach den Ansprüchen 1 bis 16, dadurch gekennzeichnet, daß die elektronenstrahlvernetzenden Weichmacher, insbesondere multifunktionelle Acrylate, in dem Trägermaterial oder der Sperrschicht oder in Trägermaterial und Sperrschicht zugesetzt werden.

18. Verfahren nach den Ansprüchen 1 bis 17, dadurch gekennzeichnet, daß der Schmelzhaftkleber, vorzugsweise ein Acrylatsystem und/oder ein Synthesekautschuksystem, mit einem Flächengewicht von 30 g / m² bis 100 g / m², vorzugsweise 40 g / m² bis 80 g / m² aufgelegt wird.

## Claims

1. Process for producing a pressure-sensitive double-sided adhesive tape, in which
a) a ready-made rubber-based backing material is introduced into a screw extruder, where
1. the backing material is heated by means of heating elements present on the screw extruder,
2. in a degassing zone, the backing material is freed from volatile constituents by means of the application of reduced pressure,
3. the backing material is homogenized and brought to the intended temperature,
b) in a co-extrusion adapter, a barrier layer conveyed by means of a further appropriate melting and conveying unit is placed onto the backing material on both sides,
c) the resulting intermediate laminate is supplied to a three-channel slot die and is uniformly extruded in web form,
d) in the said three-channel slot die a pressure-sensitive hotmelt adhesive, supplied in each case with the aid of an appropriate melting and conveying unit, is applied, top and bottom, over the whole area of the intermediate laminate,
e) the adhesive tape thus produced is placed onto an antiadhesive substrate, preferably siliconized paper,
f) if desired, the adhesive tape is cooled and crosslinked.

2. Process according to Claim 1, characterized in that the backing material is crosslinked by means of electron beams in the dose range from 30 to 150 kGy, preferably from 50 to 100 kGy, with acceleration voltages of between 200 kV to [sic] 1000 kV.

3. Process according to Claim 1 or 2, characterized in that, between process steps a) and b), an adhesion promoter is additionally applied to both sides of the backing material.

4. Process according to Claims 1 to 3, characterized in that the hotmelt pressure-sensitive adhesive is melted and transported in a melting and conveying unit and is applied to both sides of the intermediate composite by means of appropriately placed pipelines.

5. Process according to Claims 1 to 4, characterized in that the viscosity ratio of backing material to the barrier layer does not exceed 5, especially 2, and the viscosity ratio of backing material to hotmelt pressure-sensitive adhesive does not exceed 10, especially 8.

6. Process according to Claims 1 to 5, characterized in that the rubber used as backing material are [sic] a natural rubber, a butyl rubber an acrylonitrilebutadiene rubber, a random styrene-butadiene rubber or a blend of these rubbers, especially a blend of a natural rubber and a random styrene-butadiene rubber, and with very particular preference a natural rubber.

7. Process according to Claim 6, characterized in that the rubber has a Mooney value ML₍₁₊₄₎ (100°C) of from 40 to 80.

8. Process according to Claim 6 or 7, characterized in that the rubbers used as backing material have been blended with one or more additives such as anti-ageing agents, crosslinkers, light stabilizers, ozone protectants, fatty acids, resins and vulcanizing agents.

9. Process according to Claims 6 to 8, characterized in that the rubbers used as backing material have been filled with one or more fillers such as carbon black, zinc oxide, silica, silicates and chalk.

10. Process according to Claims 6 to 9, characterized in that the rubbers used as backing material have been blended with polyisobutylene, copolymers thereof or polyisoprenes as plasticizers.

11. Process according to Claims 6 to 10, characterized in that the rubbers used as backing material have been blended with an electron-beam-crosslinking plasticizer, such as multifunctional acrylates.

12. Process according to Claims 6 to 11, characterized in that the backing material has the following composition:
- rubber content from 40 to 70% by weight,
- filler content from 10 to 50% by weight,
- plasticizer content from 4 to 40% by weight,
- anti-ageing agent from 0.1 to 2% by weight,
- vulcanizing auxiliary less than 10% by weight,
- optional foaming agent less than 10% by weight,
- optional colorant content less than 5% by weight.

13. Process according to Claims 1 to 12, characterized in that the backing material has a thickness of from 300 to 2000 µm, in particular from 400 to 1200 µm.

14. Process according to Claims 1 to 13, characterized in that the barrier layer consists of PVDC, EVOH or nitrile rubber, especially polyamide.

15. Process according to Claims 1 to 14, characterized in that the barrier layer has additionally been blended with adhesion promoters.

16. Process according to Claims 1 to 15, characterized in that the barrier layer has a thickness of from 5 to 40 µm, in particular from 10 to 30 µm.

17. Process according to Claims 1 to 16, characterized in that the electron-beam-crosslinking plasticizers, especially multifunctional acrylates, are added in the backing material or in the barrier layer or in backing material and barrier layer.

18. Process according to Claims 1 to 17, characterized in that the hotmelt pressure-sensitive adhesive, preferably an acrylate system and/or a synthetic rubber system, is applied with a weight per unit area of from 30 to 100 g / m², preferably from 40 to 80 g / m².

## Revendications

1. Procédé de fabrication d'un ruban adhésif double face sensible à la pression, dans lequel :
a) dans une extrudeuse à vis, un matériau de support préconfectionné à base de caoutchouc est délivré, dans lequel :
1. le matériau de support est réchauffé par des éléments chauffants prévus sur l'extrudeuse à vis,
2. le matériau de support est libéré de composants volatils dans une zone de dégazage, au moyen d'une dépression appliquée,
3. le matériau de support est homogénéisé et amené à la température de consigne,
b) dans un adaptateur de coextrusion, une couche barrière apportée au moyen d'un autre organe approprié de fusion et de transport est déposée des deux côtés sur le matériau de support,
c) le composite intermédiaire ainsi formé est apporté à une filière à large fente à trois canaux et façonné en forme de bande régulière,
d) dans ladite filière à large fente à trois canaux, au-dessus et en dessous du composite intermédiaire, une colle autoadhésive à l'état fondu apportée au moyen d'un organe approprié de fusion et de transport est déposée sur toute la surface,
e) le ruban adhésif ainsi préparé est déposé sur un substrat antiadhésif, de préférence un papier siliconé,
f) le ruban adhésif est le cas échéant refroidi et réticulé.

2. Procédé selon la revendication 1, caractérisé en ce que le matériau de support est réticulé à l'aide de rayonnements électroniques, à la dose dans la plage de 30 kGy à 150 kGy, de préférence 50 kGy à 100 kGy, les tensions d'accélération étant comprises entre 200 kV et 1 000 kV.

3. Procédé selon les revendications 1 ou 2, caractérisé en ce qu'entre les étapes de processus a) et b), un agent favorisant l'adhérence est de plus déposé des deux côtés du matériau de support.

4. Procédé selon les revendications 1 à 3, caractérisé en ce que la colle autoadhésive à l'état fondu est fondue et transportée dans un organe de fusion et de transport et est déposée sur les deux faces du composite intermédiaire par un tracé de lignes approprié.

5. Procédé selon les revendications 1 à 4, caractérisé en ce que le rapport de viscosité du matériau de support et de la couche barrière ne dépasse pas la valeur de 5, et en particulier la valeur de 2, et le rapport de viscosité du matériau de support et de la colle autoadhésive à l'état fondu ne dépasse pas la valeur de 10, en particulier la valeur de 8.

6. Procédé selon les revendications 1 à 5, caractérisé en ce que le caoutchouc utilisé comme matériau de support est un caoutchouc naturel, un caoutchouc butyle, un caoutchouc acrylonitrile-butadiéne, un caoutchouc styrène-butadiène statistique ou un mélange desdits caoutchoucs, en particulier un mélange d'un caoutchouc naturel et d'un caoutchouc styrène-butadiène statistique, de manière tout à fait préférée cependant un caoutchouc naturel.

7. Procédé selon la revendication 6, caractérisé en ce que le caoutchouc présente un indice Mooney ML₍₁₊₄₎ (100°C) de 40 à 80.

8. Procédé selon les revendications 6 ou 7, caractérisé en ce que les caoutchoucs utilisés comme matériau de support sont mélangés avec un ou plusieurs additifs tels que des agents de protection contre le vieillissement, des agents de réticulation, des agents de protection contre la lumière, des agents de protection contre l'ozone, des acides gras, des résines et des agents de vulcanisation.

9. Procédé selon les revendications 6 à 8, caractérisé en ce que les caoutchoucs utilisés comme matériau de support sont chargés d'une ou de plusieurs charges tels que du noir de carbone, de l'oxyde de zinc, de l'acide silicique, des silicates et de la craie.

10. Procédé selon les revendications 6 à 9, caractérisé en ce que les caoutchoucs utilisés comme matériau de support sont mélangés avec du polyisobutylène, ses copolymères ou des polyisoprènes, comme plastifiants.

11. Procédé selon les revendications 6 à 10, caractérisé en ce que les caoutchoucs utilisés comme matériau de support sont mélangés avec un plastifiant réticulant par rayonnement électronique, tels que des acrylates multifonctionnels.

12. Procédé selon les revendications 6 à 11, caractérisé en ce que le matériau de support présente la composition suivante :
- proportion de caoutchouc 40% en poids à 70% en poids
- proportion de charge 10% en poids à 50% en poids
- proportion de plastifiant 4% en poids à 40% en poids
- Agent de protection contre le vieillissement 0,1% en poids à 2% en poids
- Auxiliaire de vulcanisation moins de 10% en poids
- Agent de moussage éventuel moins de 10% en poids
- proportion éventuelle de colorant moins de 5% en poids

13. Procédé selon les revendications 1 à 12, caractérisé en ce que le matériau de support présente une épaisseur de 300 µm à 2 000 µm, en particulier 400 µm à 1 200 µm.

14. Procédé selon les revendications 1 à 13, caractérisé en ce que la couche barrière est constituée de PVDC, d'EVOH ou de caoutchouc nitrile, en particulier de polyamide.

15. Procédé selon les revendications 1 à 14, caractérisé en ce que la couche barrière est de plus mélangée avec des substances favorisant l'adhérence.

16. Procédé selon les revendications 1 à 15, caractérisé en ce que la couche barrière présente une épaisseur de 5 µm à 40 µm, en particulier 10 µm à 30 µm.

17. Procédé selon les revendications 1 à 16, caractérisé en ce que le plastifiant réticulant par rayonnement électronique, en particulier des acrylates multifonctionnels, sont ajoutés dans le matériau de support ou dans la couche barrière, ou dans le matériau de support et dans la couche barrière.

18. Procédé selon les revendications 1 à 17, caractérisé en ce que la colle autoadhésive à l'état fondu, de préférence un système acrylique et/ou un système de caoutchouc de synthèse, est déposée à un poids superficiel de 30 g/m² à 100 g/m², de préférence 40 g/m² à 80 g/m².
